# EUROPEAN PATENT APPLICATION

(11) **EP 4 668 199 A1**
(43) Date of publication of application: **24.12.2025**
(21) Application number: 24774476.6
(22) Date of filing: 06.02.2024
(51) Int. Cl.: G06Q 50/04, G05B 19/418

(54) **QUALITY DEFECT DIAGNOSTIC DEVICE AND QUALITY DEFECT DIAGNOSTIC METHOD**

(30) Priority: 22.03.2023 JP 2023045520
(71) Applicant: JFE Steel Corporation, Tokyo 100-0011 (JP)
(72) Inventor: TAKAGI, Hiroyuki, Tokyo 100-0011 (JP); HIRATA, Takehide, Tokyo 100-0011 (JP)
(74) Representative: Hoffmann Eitle
(86) International application number: PCT/JP2024/003875
(87) International publication number: WO 2024/195330

(57) **Abstract**

A quality defect diagnosis device diagnoses a quality defect occurring in a product, the quality defect diagnosis device including: a data dividing unit that two-dimensionally divides product data as a diagnosis subject into predetermined blocks, the product data including operational data and quality data; a data aggregation unit that extracts the operational data for each of predetermined classifications of quality defects on a basis of a trend of quality defects in the divided blocks and aggregates the extracted operational data for each of the blocks and for each region including two or more of the blocks; a quality defect determination unit that evaluates presence or absence of occurrence of a quality defect by using a plurality of prediction models which is generated for each of the classifications of quality defects and in which a relationship between the aggregated operational data and the quality data is learned; and a factor estimation unit that estimates a factor of the quality defect on a basis of a quality defect quality defect determination step result.

## Description

### Field

The present invention relates to a quality defect diagnosis device and a quality defect diagnosis method.

### Background

Patent Literature 1 discloses, as a method of predicting and diagnosing the quality of a product, a method of associating operational condition data at the time of manufacturing products and quality determination data in the final step in consideration of a quality defect determination position on the product and predicting the quality using a prediction model that has learned the data.

### Citation List

### Patent Literature

Patent Literature 1: Japanese Patent No. 6953990

### Summary

### Technical Problem

However, using the quality data uniformly regardless of their characteristics in predicting the product quality leads to a lack of information about a plurality of types of quality defects caused by different mechanisms. Therefore, even if a prediction model is generated based on such quality data, there may be a problem that sufficient prediction performance is not achieved.

The present invention has been made in view of the above, and an object of the invention is to provide a quality defect diagnosis device and a quality defect diagnosis method capable of predicting a quality defect of a product with high accuracy and estimating a factor of the quality defect.

### Solution to Problem

To resolve the problem and attain the object, a quality defect diagnosis device according to the present invention that diagnoses a quality defect occurring in a product, includes: a data dividing unit that two-dimensionally divides product data as a diagnosis subject into predetermined blocks, the product data including operational data and quality data; a data aggregation unit that extracts the operational data for each of predetermined classifications of quality defects on a basis of a trend of quality defects in the divided blocks and aggregates the extracted operational data for each of the blocks and for each region including two or more of the blocks; a quality defect determination unit that evaluates presence or absence of occurrence of a quality defect by using a plurality of prediction models which is generated for each of the classifications of quality defects and in which a relationship between the aggregated operational data and the quality data is learned; and a factor estimation unit that estimates a factor of the quality defect on a basis of a quality defect quality defect determination step result.

In the above quality defect diagnosis device according to the present invention, in a case where it is determined that a quality defect is predicted to occur in a specific product as a diagnosis subject, the factor estimation unit estimates operational data necessary for suppressing occurrence of the quality defect.

In the above quality defect diagnosis device according to the present invention, in a case where a quality defect has occurred in a specific product, the factor estimation unit estimates operational data that has caused the occurrence of the quality defect.

In the above quality defect diagnosis device according to the present invention, in a case where a quality defect has occurred in a large number of products, the factor estimation unit estimates operational data that has caused the occurrence of the quality defects.

In the above quality defect diagnosis device according to the present invention, the prediction model is generated by: dividing product data of actual values including operational data and quality data in a two-dimensional manner for each predetermined block; classifying a quality defect included in the quality data on a basis of a trend of the quality defects in the divided blocks; aggregating the operational data extracted for each of the classifications of the quality defects for each of the blocks and for each region including two or more of the blocks; and learning a relationship between the aggregated operational data and the quality data by machine learning for each of the classifications of the quality defects.

In the above quality defect diagnosis device according to the present invention, the classifications of the quality defects are two or more of a leading section, a tail end section, a middle section, a widthwise edge section, a single defect, or clustered defects.

In the above quality defect diagnosis device according to the present invention, the data aggregation unit aggregates the operational data by calculating any one or more of a mean value, a maximum value, a minimum value, a standard deviation, a variance, or a difference between maximum and minimum of the operational data for each block or each product.

In the above quality defect diagnosis device according to the present invention, correlation is obtained between the quality data and a template generated in advance for each trend of quality defects, and the quality defects are classified on a basis of a magnitude of the correlation.

To resolve the problem and attain the object, a quality defect diagnosis method for diagnosing a quality defect occurring in a product, includes: a data dividing step of two-dimensionally dividing product data as a diagnosis subject into predetermined blocks by a data dividing means comprised in a computer, the product data including operational data and quality data; a data aggregation step of extracting the operational data for each of predetermined classifications of quality defects on a basis of a trend of quality defects in the divided blocks and aggregating the extracted operational data for each of the blocks and for each region including two or more of the blocks by a data aggregation means comprised in the computer; a quality defect determination step of determining presence or absence of occurrence of a quality defect by using a plurality of prediction models which is generated for each of the classifications of quality defects and in which a relationship between the aggregated operational data and the quality data is learned by a quality defect quality defect determination means comprised in the computer; and a factor estimation step of estimating a factor of the quality defect on a basis of a quality defect quality defect determination step result by a factor estimation means comprised in the computer.

### Advantageous Effects of Invention

According to a quality defect diagnosis device and a quality defect diagnosis method according to the present invention, it is possible to predict a quality defect of a product with high accuracy and to estimate a factor of the quality defect by generating and using a prediction model of the relationship between operational data and quality defects for each classification corresponding to the trend of quality defects.

### Brief Description of Drawings

FIG. 1 is a diagram illustrating a schematic configuration of an information processing device that implements a quality defect diagnosis device according to an embodiment of the present invention.
FIG. 2 is a diagram for explaining details of a data dividing step performed by a data dividing unit of the quality defect diagnosis device according to the embodiment of the invention.
FIG. 3 is a diagram for explaining details of a quality defect classification step performed by a quality defect classification unit of the quality defect diagnosis device according to the embodiment of the invention.
FIG. 4 is a diagram for explaining aggregation of operational data of a leading section in a data aggregation step performed by a data aggregation unit of the quality defect diagnosis device according to the embodiment of the invention.
FIG. 5 is a diagram for describing aggregation of operational data of a tail end section in the data aggregation step performed by the data aggregation unit of the quality defect diagnosis device according to the embodiment of the invention.
FIG. 6 is a diagram for describing aggregation of operational data in a middle section in the data aggregation step performed by the data aggregation unit of the quality defect diagnosis device according to the embodiment of the invention.
FIG. 7 is a diagram for describing aggregation of operational data in a widthwise edge section in the data aggregation step performed by the data aggregation unit of the quality defect diagnosis device according to the embodiment of the invention.
FIG. 8 is a diagram for describing aggregation of operational data of a single defect and clustered defects in the data aggregation step performed by the data aggregation unit of the quality defect diagnosis device according to the embodiment of the invention.
FIG. 9 is a flowchart illustrating a procedure of a generation method of a prediction model used in the quality defect diagnosis method according to the embodiment of the invention.
FIG. 10 is a flowchart illustrating a procedure of the quality defect diagnosis method according to the embodiment of the present invention.

### Description of Embodiments

A quality defect diagnosis device and a quality defect diagnosis method according to an embodiment of the present invention will be described with reference to the drawings. The quality defect diagnosis device and the quality defect diagnosis method are for diagnosing a quality defect occurring in a product. Examples of the "product" in the present embodiment include steel products (for example, a coil) manufactured through a plurality of steps. In addition, examples of the "quality defect" in the present embodiment include, for example, a surface defect, an internal defect, a material property value (for example, a determination result of mechanical properties), and the like.

### [Information Processing Device]

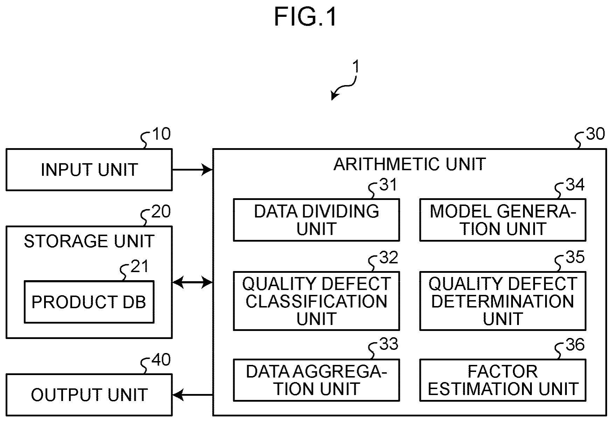

FIG. 1 illustrates the configuration of an information processing device 1 that implements a quality defect diagnosis device according to an embodiment. As illustrated in FIG. 1, the information processing device 1 includes an input unit 10, a storage unit 20, an arithmetic unit 30, and an output unit 40.

The quality defect diagnosis device according to the embodiment can be implemented by components of the information processing device 1 excluding a quality defect classification unit 32 and a model generation unit 34 of the arithmetic unit 30. Meanwhile, a generation device of a prediction model used in the quality defect diagnosis device according to the embodiment can be implemented by components of the information processing device 1 excluding a quality defect determination unit 35 and a factor estimation unit 36 of the arithmetic unit 30. Each component of the information processing device 1 will be described below.

The input unit 10 is an input means to the arithmetic unit 30 and is implemented by an input device such as a keyboard, a mouse pointer, and a numeric keypad. The input unit 10 inputs information necessary for various types of processing in the arithmetic unit 30.

The storage unit 20 includes a recording medium such as an erasable programmable ROM (EPROM), a hard disk drive (HDD), and a removable medium. Examples of the removable medium include a universal serial bus (USB) memory and a disk recording medium such as a compact disc (CD), a digital versatile disc (DVD), or a Blu-ray (registered trademark) disc (BD). The storage unit 20 can store an operating system (OS), various programs, various tables, various databases, and the like. The storage unit 20 stores a product database (DB) 21.

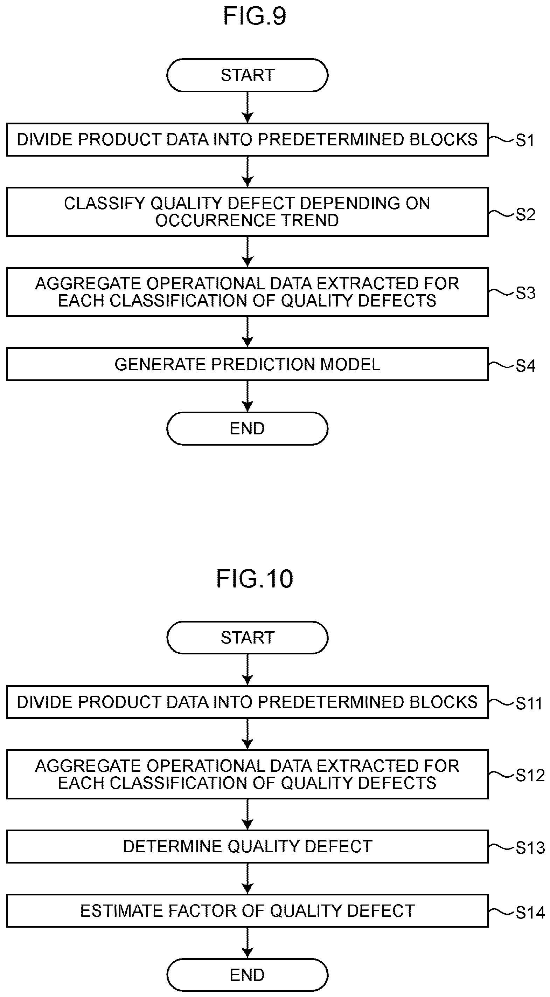

The product DB21 stores product data manufactured in the past. This product data includes operational data and quality data. The "operational data" is obtained by measuring or estimating facility operational conditions and/or product states at the time of manufacturing products by some means. Meanwhile, the "quality data" indicates the quality based on a result of measuring or estimating the quality of products by some means. Note that the above product data includes product data of "actual values" used when a prediction model is generated (see FIG. 9) and product data of a "diagnosis subject" used when a quality defect diagnosis is performed (see FIG. 10).

In addition to the product DB21, the storage unit 20 also stores, for example, product data that is associated with each block by a data dividing unit 31, information about the classification of quality defects by the quality defect classification unit 32, operational data aggregated for each block or each product by a data aggregation unit 33, and others. Furthermore, the storage unit 20 may store quality defect quality defect determination step results by the quality defect determination unit 35, factor estimation results for quality defects by the factor estimation unit 36, and others.

The arithmetic unit 30 is implemented by, for example, a processor including a central processing unit (CPU) or the like and a memory (main memory unit) including a random access memory (RAM), a read only memory (ROM), or the like.

The arithmetic unit 30 implements a function matching a predetermined purpose by loading a program into a work area of the main memory unit and executing the program and controlling each component or the like through the execution of the program. The arithmetic unit 30 functions as the data dividing unit 31, the quality defect classification unit 32, the data aggregation unit 33, the model generation unit 34, the quality defect determination unit 35, and the factor estimation unit 36 through execution of the program described above. Although FIG. 1 illustrates an example in which the functions of the units are implemented by one computer (arithmetic unit), the means for implementing the functions of the units is not particularly limited, and for example, the functions of the units may be implemented by a plurality of computers.

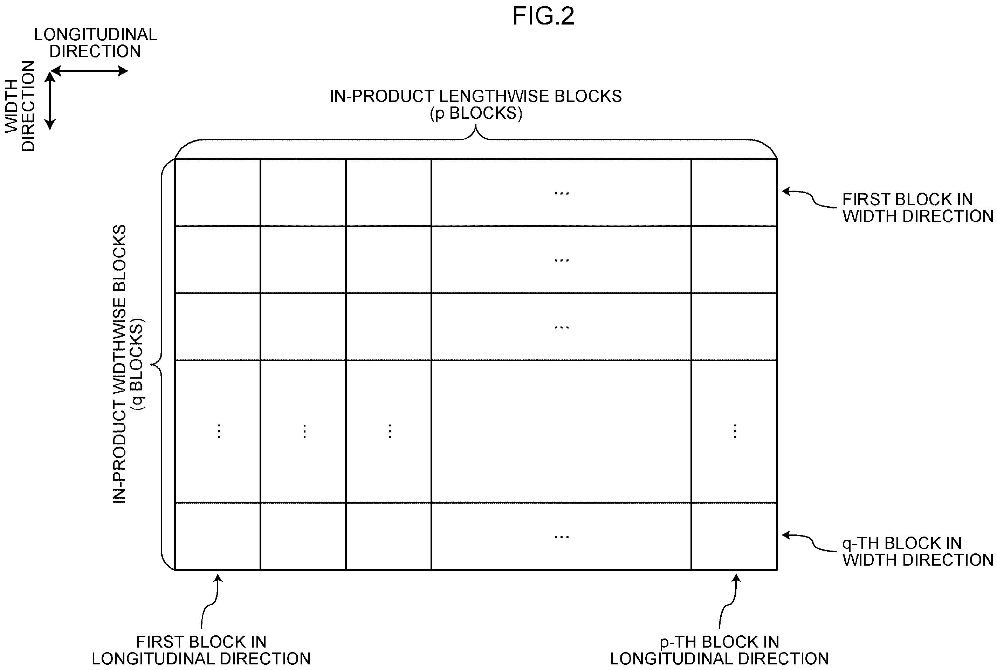

The data dividing unit 31 divides the product data into predetermined blocks in a two-dimensional manner. For example, as illustrated in FIG. 2, the data dividing unit 31 divides the total length of the product data in the product longitudinal direction into p blocks and divides the total length of the product data in the product width direction into q blocks. In the drawing, the leftmost block in the product longitudinal direction is defined as a first block, and the rightmost block is defined as a q-th block. In the drawing, the uppermost block in the product width direction is defined as a first block, and the lowermost block is defined as a p-th block. The data dividing unit 31 stores the product data including the operational data and the quality data in the storage unit 20 in association with the blocks obtained by dividing a product as illustrated in FIG. 2.

The data dividing unit 31 divides product data of actual values when generating the prediction model (see FIG. 9). The data dividing unit 31 also divides product data of a diagnosis subject when performing the quality defect diagnosis (see FIG. 10). It is also desirable that the data dividing method (number of divisions, area of each block, and the like) be the same for both when the prediction model is generated and when the quality defect diagnosis is performed.

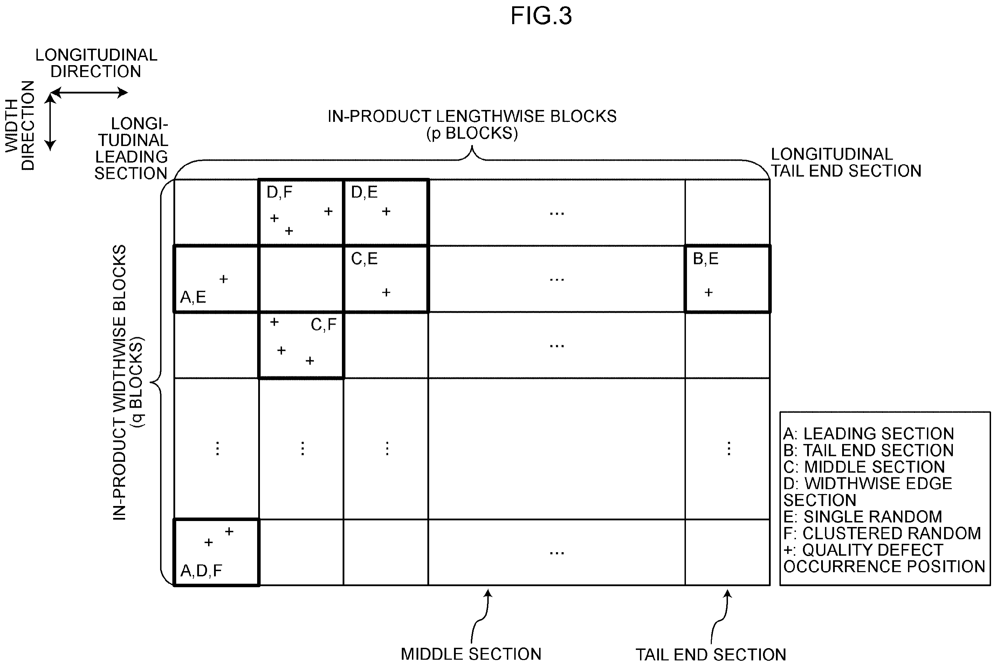

The number of divisions (values of q and p) of the product data is not particularly limited; however, it is desirable to set at least three or more divisions (values of q and p > 3 each). In addition, the areas of the respective blocks after the division may be the same or different for each piece of product data. For example, in the quality defect classification (see FIG. 3) described later, blocks classified into a widthwise edge section or a middle section may have different areas (regions) for each piece of product data.

The quality defect classification unit 32 classifies quality defects included in the quality data into two or more groups on the basis of the trend of quality defects in the divided blocks. Note that the "trend of quality defects" indicates, for example, the occurrence position, the occurrence distribution, and the like of the quality defects in the divided blocks (see FIG. 1).

Specifically, the quality defect classification unit 32 classifies the quality defects in the quality data into those occurring at a specific position in the product longitudinal direction (for example, a leading section, a tail end section, a middle section, or a widthwise edge section) and those occurring singly or in clusters over the entire length and width of the product. For example, as illustrated in FIG. 2, the quality defect classification unit 32 classifies the quality defects in the quality data into at least two of a leading section, a tail end section, a middle section, a widthwise edge section, a single defect, and clustered defects.

That is, in a case where a quality defect is occurring in the first block from the head in the product longitudinal direction in the block divisions in the product longitudinal direction, the quality defect classification unit 32 classifies this quality defect to the "leading section". Meanwhile, in a case where a quality defect is occurring in the p-th block from the head in the product longitudinal direction in the block divisions in the product longitudinal direction, the quality defect classification unit 32 classifies this quality defect to the "tail end section".

In addition, in a case where quality defects are occurring in blocks in the second to (p - 1)th places from the head in the product longitudinal direction in the block divisions in the product longitudinal direction and the second to (q - 1)th places from the head in the product width direction, the quality defect classification unit 32 classifies the quality defects to the "middle section". In a case where a quality defect is occurring in the first or the q-th block in the block divisions in the product width direction, the quality defect classification unit 32 classifies the quality defect to the "widthwise edge section".

In a case where only one quality defect is included in one block on the block divisions in the product longitudinal direction and the product width direction, the quality defect classification unit 32 classifies the quality defect to the "single defect". Meanwhile, in a case where two or more quality defects are included in one block in the block divisions in the product longitudinal direction and the product width direction, the quality defect classification unit 32 classifies the quality defects to the "clustered defects".

Note that in this example, p and q are integers satisfying p ≥ 3 and q ≥ 3, respectively, and the values of p and q are desirably determined in advance. In this case, two or more types of quality defects classified for each block may overlap each other, or a priority order (such as leading section and tail end section > widthwise edge section) may be given to the classification criterion, and the quality defects may be limited to a single type.

For example, in the classification of quality defects illustrated in FIG. 3, the leading section, the tail end section, and the middle section do not overlap with any of them, and the middle section and the widthwise edge section do not overlap. Meanwhile, the leading section and the widthwise edge section may overlap, and the tail end section and the widthwise edge section may overlap. In addition, a single defect and clustered defects do not overlap each other; however, a single defect or clustered defects and other classifications (leading section, tail end section, middle section, or widthwise edge section) may overlap. The quality defect classification unit 32 stores information related to the classification of quality defects as illustrated in FIG. 3 in the storage unit 20.

The quality defect classification unit 32 classifies quality data of actual values when generating the prediction model (see FIG. 9). Then, when the quality defect diagnosis is performed (see FIG. 10), operational data of the diagnosis subject is aggregated using the classification of the quality defects at the time of generating the prediction model.

In this example, the quality defect classification unit 32 may correlate the quality data with a template generated in advance for each trend of quality defects and classify the quality defect on the basis of the magnitude of the correlation. In this case, a template for each quality defect classification (leading section, tail end section, middle section, widthwise edge section, single defect, and clustered defects) is prepared in advance, and a quality defect classification associated with a template having the highest correlation is adopted.

Examples of the template include a distribution of positions of respective classifications of quality defects obtained by labeling quality defect data of a large number of past products and aggregating the data. In this case, the type of a quality defect may be determined to be the same as the type in the template having the highest occurrence rate in the block including the quality defect portion in the product as a diagnosis subject. By using such a method, quality defects can be quickly classified for a large amount of product data.

The data aggregation unit 33 aggregates operational data for each block or each product. The data aggregation unit 33 first extracts operational data for each classification of quality defects (see FIG. 3). The classification of quality defects used here is the classification of quality defects classified by the quality defect classification unit 32 at the time of generating the prediction model. Subsequently, the data aggregation unit 33 aggregates the extracted operational data for each block and for each region including two or more of the blocks. The data aggregation unit 33 aggregates operational data as follows, for example.

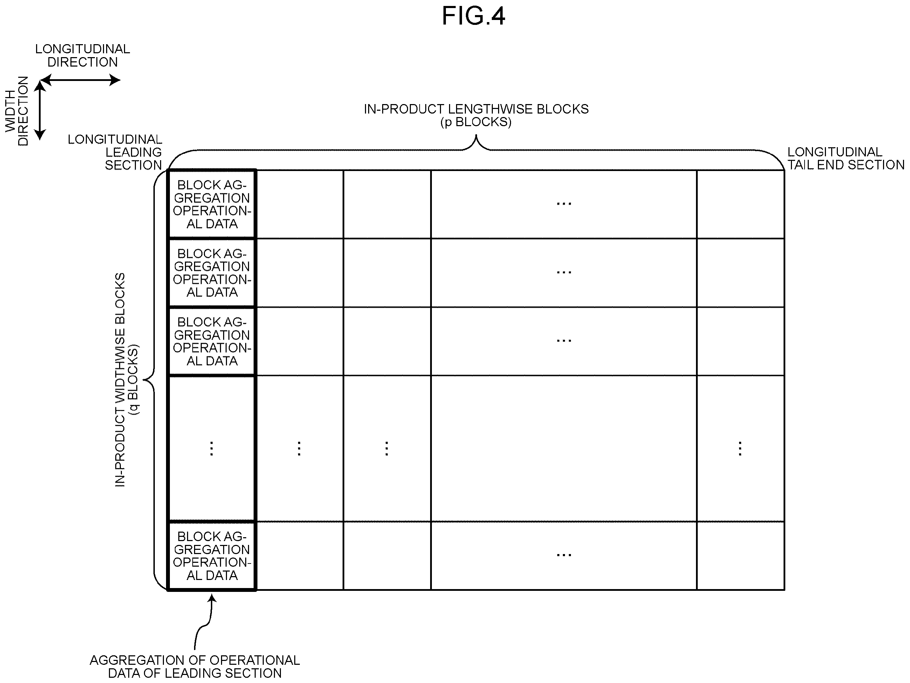

For example, as illustrated in FIG. 4, the data aggregation unit 33 extracts only the operational data of the first block from the head among the p blocks in the product longitudinal direction for quality defects of which classification is "leading section" and aggregates the extracted operational data for each block. As described above, since a quality defect is particularly likely to occur in the leading section, the operational data is aggregated for each block.

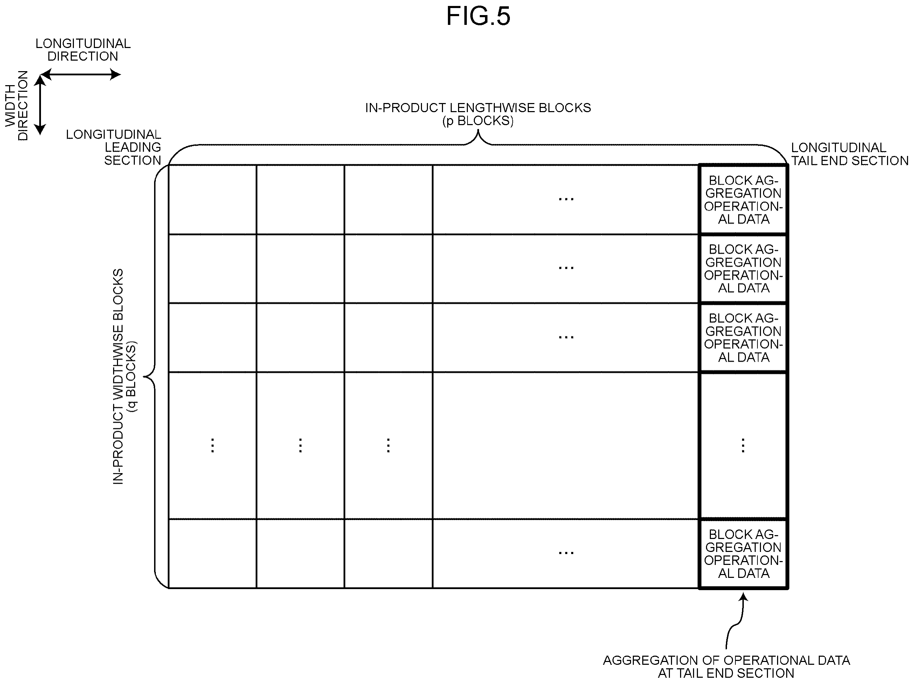

Furthermore, for example, as illustrated in FIG. 5, the data aggregation unit 33 extracts only the operational data of the p-th block from the head among the p blocks in the product longitudinal direction for quality defects of which classification is "tail end section" and aggregates the extracted operational data for each block. As described above, since a quality defect is particularly likely to occur in the tail end section similarly to the leading section, the operational data is aggregated for each block.

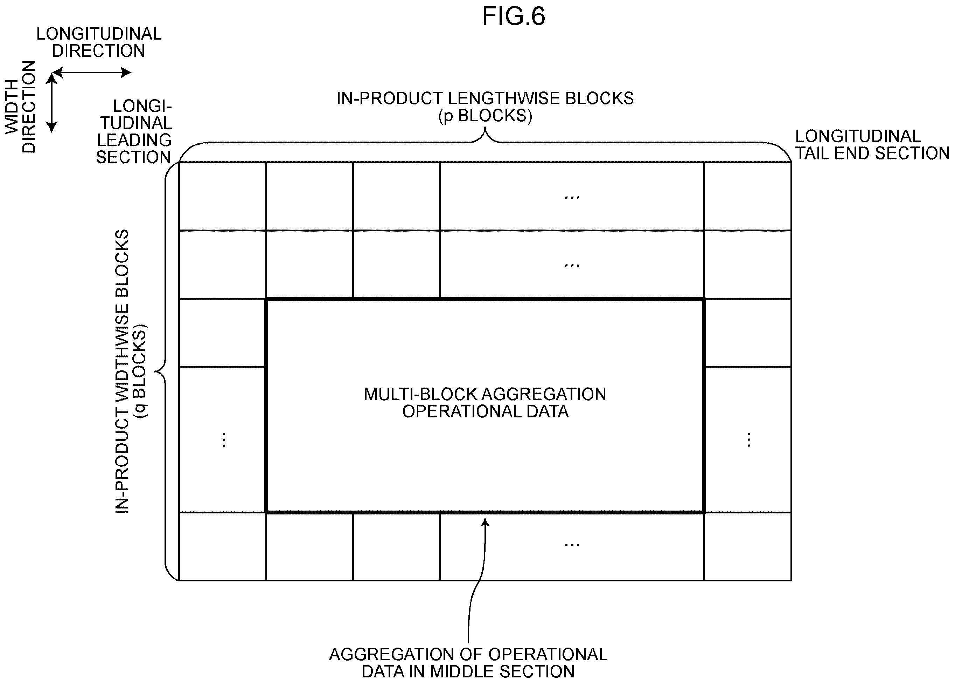

Meanwhile, for example, as illustrated in FIG. 6, the data aggregation unit 33 extracts only the operational data of the second to (p - 1)th blocks from the head in the product longitudinal direction and the second to (q - 1)th blocks from the head in the product width direction for quality defects of which classification is "middle section". Then, the data aggregation unit 33 aggregates the extracted operational data for each product. That is, in the drawing, a block encircled by a bold line is regarded as one piece of data.

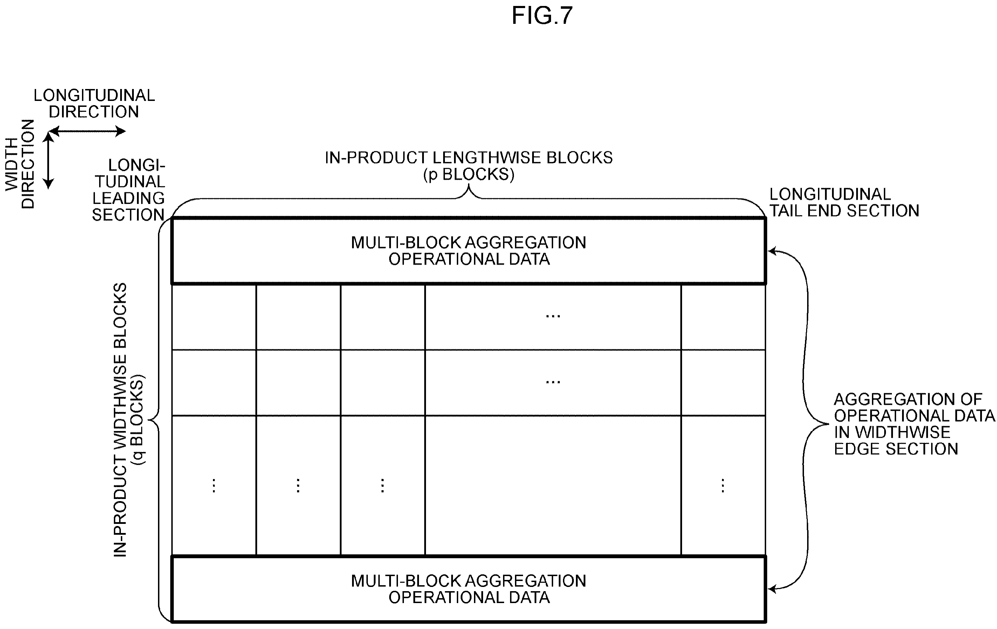

For example, as illustrated in FIG. 7, the data aggregation unit 33 extracts operational data of all the blocks in the longitudinal direction in the first column in the product width direction and operational data of all the blocks in the longitudinal direction in the q-th column in the product width direction for quality defects of which classification is "widthwise edge section". Then, the data aggregation unit 33 aggregates the extracted operational data for each product. That is, in the drawing, a block encircled by a bold line is regarded as one piece of data.

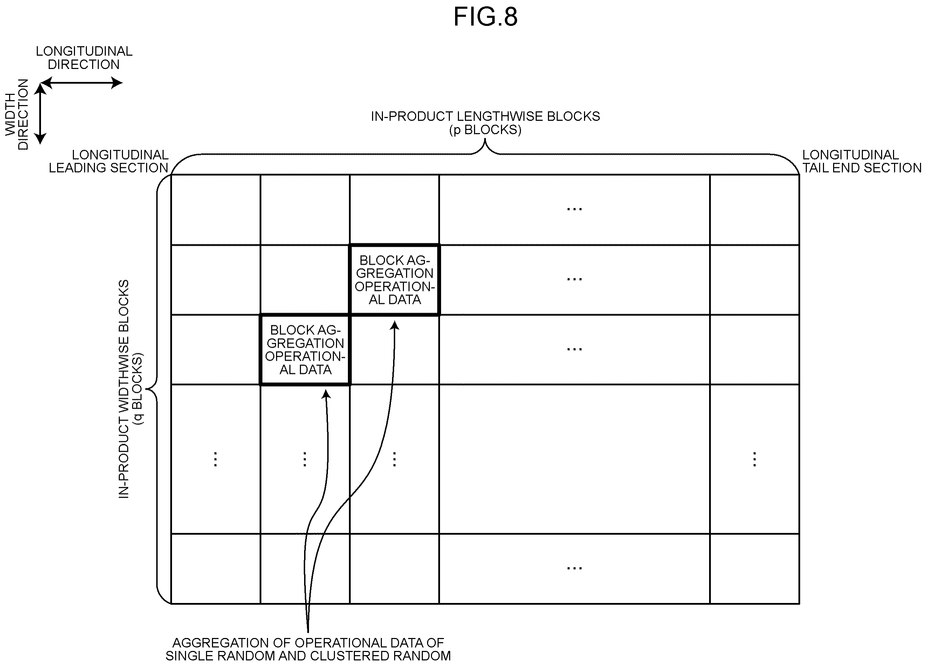

In addition, for example, as illustrated in FIG. 8, for a quality defect of which classification is "single defect", the data aggregation unit 33 extracts operational data of a block corresponding to the single defect and operational data of a block in which no quality defect has occurred. Then, the extracted operational data is aggregated for each block.

Furthermore, for example, as illustrated in FIG. 8, the data aggregation unit 33 extracts, for a quality defect of which classification is "clustered defects", operational data of a block corresponding to the clustered defects and operational data of a block in which no quality defect has occurred. Then, the extracted operational data is aggregated for each block.

As a method of aggregation in the data aggregation unit 33, for example, summary statistics representing values at each position in a block or a product can be adopted. Specifically, values such as the mean value, the maximum value, the minimum value, a standard deviation, a variance, or a range represented by a difference between maximum and minimum can be adopted. In this manner, the data aggregation unit 33 aggregates the operational data by calculating any one or more of the mean value, the maximum value, the minimum value, the standard deviation, the variance, and the difference between maximum and minimum of the operational data for each block or each product. Note that at least one type of summary statistics is adopted in the aggregation of the operational data; however, a plurality of types of summary statistics may be adopted. The data aggregation unit 33 stores the operational data aggregated for each block or each product in the storage unit 20.

The data aggregation unit 33 aggregates operational data of the actual values when generating the prediction model (see FIG. 9). The data aggregation unit 33 also aggregates the operational data of the diagnosis subject when performing the quality defect diagnosis (see FIG. 10).

The model generation unit 34 generates a plurality of prediction models depending on the classification of quality defects. The model generation unit 34 generates a plurality of prediction models depending on the classification of quality defects by learning the relationship between aggregated operational data and quality data by machine learning for each classification of quality defects.

That is, the model generation unit 34 constructs a prediction model indicating a relationship between the operational data aggregated for each block or each product and the quality defect occurring in the corresponding block or product for each classification of the quality defect. The model generation unit 34 generates, for example, six types of prediction models that each predict a quality defect of one of the leading section, the tail end section, the middle section, the widthwise edge section, the single defect, or the clustered defects. For generating these prediction models, for example, various machine learning algorithms represented by a deep neural network, a decision tree, a support vector machine, and the like, or other statistical algorithms can be used.

The quality defect determination unit 35 determines whether or not a quality defect is occurring using the plurality of prediction models generated by the model generation unit 34. The quality defect determination unit 35 determines whether or not a quality defect is occurring for each classification by inputting the operational data of the diagnosis subject to each of the prediction models of the respective classifications. Note that the operational data input to the prediction model is data aggregated for each block or each product through data division in the data dividing unit 31 and data aggregation in the data aggregation unit 33 (see FIG. 10).

The quality defect quality defect determination step by the quality defect determination unit 35 is performed, for example, before manufacturing the product or during manufacturing the product. In the case of performing the quality defect quality defect determination step before manufacturing the product, a quality defect of the product after manufacturing is predicted by inputting setting values of manufacturing conditions before processing to the prediction model as the operational data of the product to be predicted and performing calculation. In addition, in the case of performing the quality defect quality defect determination step during manufacturing the product, a quality defect of the product after manufacturing is predicted by inputting actual values of processed manufacturing conditions and set values of manufacturing conditions before processing to the prediction model and calculating as the operational data of the product to be predicted, whereby a quality defect of the product after manufacturing is predicted.

In a case where the quality defect quality defect determination step result by the quality defect determination unit 35 is output to the output unit 40, for example, a product plan view divided for each product or each block for each classification of quality defects is displayed on a screen on which information regarding the product as the diagnosis subject can be browsed. Then, in the case of a prediction result of no quality defect, a ∘ mark may be displayed at the corresponding portion on the product plan view, and in the case of a prediction result of presence of a quality defect, an × mark may be displayed. Alternatively, depending on the prediction result whether a quality defect is occurring or not, the results may be displayed in different colors. Alternatively, the output unit 40 may output text such as "the product as the diagnosis subject (or a specific block of the product as the diagnosis subject) is predicted to have a quality defect" only in a case where the prediction result is presence of a quality defect.

The quality defect determination unit 35 performs quality defect determination step by inputting the operational data of the diagnosis subject to all of the prediction models for the leading section, the tail end section, the middle section, the widthwise edge section, the single defect, and the clustered defects; however, the operational data of the diagnosis subject may be input only to some of the prediction models. For example, in a case where the operational data of the diagnosis subject is in a "corner", namely, the data is that of the first block from the head in the product longitudinal direction and the first block from the head in the product width direction, the occurring quality defect is limited to the leading section, the widthwise edge section, and either the single defect or the clustered defects. Therefore, in this case, it is sufficient to input the operational data of the diagnosis subject only to the prediction models for predicting quality defects of the leading section, the widthwise edge section, the single defect, and the clustered defects.

The factor estimation unit 36 estimates the factor of the quality defect on the basis of the quality defect quality defect determination step result by the quality defect determination unit 35. The "factor of the quality defect" indicates, for example, operational data that is an important factor for the quality defect of the product.

For example, in a case where it is determined that a quality defect occurs in a specific product as a diagnosis subject, the factor estimation unit 36 can estimate operational data necessary for suppressing the occurrence of the quality defect. That is, in a case where it is predicted that a quality defect will occur in the future in the product before or during manufacturing, operational data is estimated which needs to be modified or adjusted in order to prevent the occurrence of the quality defect. This makes it possible to consider a countermeasure for suppressing the occurrence of quality defects.

In addition, in a case where a quality defect is occurring in a specific product, the factor estimation unit 36 can estimate the operational data that has caused the occurrence of the quality defect. That is, in a case where there is a quality defect in a manufactured product, the operational data that has caused the quality defect is estimated. This makes it possible to specify the factor causing the quality defect.

Furthermore, in a case where a quality defect is occurring in a large number of products, the factor estimation unit 36 can estimate operational data that has caused the occurrence of the quality defects. That is, in a case where there is a quality defect in a large number of manufactured products, the operational data that has caused the quality defects can be estimated. This makes it possible to specify the factor causing the quality defect.

In a case where it is determined that a quality defect occurs in a specific product as a diagnosis subject and the operational data that is necessary for suppressing the occurrence of the quality defect is to be estimated, the factor estimation unit 36 calculates an index corresponding to the contribution of each factor in the determination for the product data. Furthermore, a factor of which index indicates a large value is estimated as an important factor. At this point, a general-purpose method for calculating predictive important factors that does not depend on a prediction model generating algorithm, such as that represented by the method called "SHapley Additive exPlanations (SHAP)", is used.

In addition, in a case where a quality defect has occurred in a specific product and the operational data that has caused the occurrence of the quality defect is to be estimated, the factor estimation unit 36 calculates an index corresponding to the contribution of each factor in the determination for the product data. Furthermore, a factor of which index indicates a large value is estimated as an important factor. At this point, a general-purpose method for calculating predictive important factors that does not depend on a prediction model generating algorithm such as the SHAP is used.

In addition, in a case where a quality defect has occurred in a large number of products and the operational data that has caused the occurrence of the quality defects is to be estimated, the factor estimation unit 36 calculates an index corresponding to the contribution of each factor to the overall prediction model. Furthermore, a factor of which index indicates a large value is estimated as an important factor.

In addition, the factor estimation unit 36 may use a method for calculating predictive important factors which is specific to an algorithm that has generated the prediction model, such as that represented by an importance level based on Gini impurity in a decision tree algorithm. Alternatively, a general-purpose method for calculating predictive important factors which does not depend on a prediction model generating algorithm, such that represented by "Permutation Importance", may be used.

The output unit 40 is implemented by, for example, a display device such as an LCD display or a CRT display. On the basis of a display signal input from the arithmetic unit 30, the output unit 40 displays, for example, the quality defect quality defect determination step result by the quality defect determination unit 35, the factor estimation result of a quality defect by the factor estimation unit 36, and others in the form of characters, a figure, or others.

### [Generation Method of Prediction Model]

A generating method of the prediction model used in the quality defect diagnosis method according to the embodiment will be described with reference to FIG. 9. In the generation method of the prediction model, a block division step (Step S1), a quality defect classification step (Step S2), a data aggregation step (Step S3), and a model generation step (Step S4) are performed.

In the block division step, the data dividing unit 31 two-dimensionally divides the product data of actual values for each predetermined block (Step S1). Subsequently, in the quality defect classification step, the quality defect classification unit 32 classifies the quality defect included in the quality data depending on the trend of quality defects in the divided blocks (Step S2).

Subsequently, in the data aggregation step, the data aggregation unit 33 aggregates the operational data extracted for each classification of quality defects for each block and for each region including two or more blocks (Step S3). Subsequently, in the model generation step, the model generation unit 34 generates a prediction model by learning the relationship between the aggregated operational data and the quality data by machine learning for each classification of quality defects (Step S4).

### [Quality Defect Diagnosis Method]

The quality defect diagnosis method according to the embodiment will be described with reference to FIG. 10. In the generation method of the prediction model, a block division step (Step S11), a data aggregation step (Step S12), a quality defect determination step (Step S13), and a factor estimation step (Step S14) are performed.

Note that, in the following description, it is based on the premise that a prediction model having been generated in advance at different timing is used in Steps S1 to S4 in FIG. 9; however, the prediction model may be generated at the time of diagnosis of quality defects. That is, Steps S1 to S4 in FIG. 9 and Steps S11 to S14 in FIG. 10 may be performed at different timing, or Steps S11 to S14 in FIG. 9 may be performed following Steps S1 to S4 in FIG. 9.

In the block division step, the data dividing unit 31 two-dimensionally divides the product data of the diagnosis subject for each predetermined block (Step S11). Subsequently, in the data aggregation step, the data aggregation unit 33 aggregates the operational data extracted for each predetermined classification of quality defects for each block and for each region including two or more blocks (Step S12). Note that, in Step S12, for example, the operational data is extracted using information regarding the classifications of quality defects generated in Step S2 of FIG. 9.

Subsequently, in the quality defect determination step, the quality defect determination unit 35 determines whether or not a quality defect is occurring using a plurality of prediction models (Step S13). Subsequently, in the factor estimation step, the factor estimation unit 36 estimates the factor of the quality defect on the basis of the quality defect quality defect determination step result (Step S14).

In the quality defect diagnosis device and the quality defect diagnosis method according to the embodiments described above, which position of a product a quality defect is occurring is classified, and the quality defect diagnosis is performed using the prediction model modeled including the classification result. That is, in the quality defect diagnosis device and the quality defect diagnosis method according to the embodiments, the relationship between the operational data and the quality defect is used to generate the prediction model for use for each classification depending on the trend of quality defects. As a result, a quality defect of a product can be predicted with high accuracy, and a factor of the quality defect can be estimated.

The quality defect diagnosis device and the quality defect diagnosis method according to the present invention have been specifically described with reference to the embodiments and examples for carrying out the invention; however, the gist of the present invention is not limited to these pieces of description and should be widely interpreted on the basis of the description of claims. It goes without saying that various modifications, variations, and the like based on the description are also included in the gist of the present invention.

### Reference Signs List

- 1: INFORMATION PROCESSING DEVICE
- 10: INPUT UNIT
- 20: STORAGE UNIT
- 21: PRODUCT DB
- 30: ARITHMETIC UNIT
- 31: DATA DIVIDING UNIT
- 32: QUALITY DEFECT CLASSIFICATION UNIT
- 33: DATA AGGREGATION UNIT
- 34: MODEL GENERATION UNIT
- 35: QUALITY DEFECT DETERMINATION UNIT
- 36: FACTOR ESTIMATION UNIT
- 40: OUTPUT UNIT

## Claims

1. A quality defect diagnosis device that diagnoses a quality defect occurring in a product, the quality defect diagnosis device comprising:
a data dividing unit that two-dimensionally divides product data as a diagnosis subject into predetermined blocks, the product data including operational data and quality data;
a data aggregation unit that extracts the operational data for each of predetermined classifications of quality defects on a basis of a trend of quality defects in the divided blocks and aggregates the extracted operational data for each of the blocks and for each region including two or more of the blocks;
a quality defect determination unit that evaluates presence or absence of occurrence of a quality defect by using a plurality of prediction models which is generated for each of the classifications of quality defects and in which a relationship between the aggregated operational data and the quality data is learned; and
a factor estimation unit that estimates a factor of the quality defect on a basis of a quality defect quality defect determination step result.

2. The quality defect diagnosis device according to claim 1, wherein, in a case where it is determined that a quality defect is predicted to occur in a specific product as a diagnosis subject, the factor estimation unit estimates operational data necessary for suppressing occurrence of the quality defect.

3. The quality defect diagnosis device according to claim 1, wherein, in a case where a quality defect has occurred in a specific product, the factor estimation unit estimates operational data that has caused the occurrence of the quality defect.

4. The quality defect diagnosis device according to claim 1, wherein, in a case where a quality defect has occurred in a large number of products, the factor estimation unit estimates operational data that has caused the occurrence of the quality defects.

5. The quality defect diagnosis device according to claim 1,
wherein the prediction model is generated by:
dividing product data of actual values including operational data and quality data in a two-dimensional manner for each predetermined block;
classifying a quality defect included in the quality data on a basis of a trend of the quality defects in the divided blocks;
aggregating the operational data extracted for each of the classifications of the quality defects for each of the blocks and for each region including two or more of the blocks; and
learning a relationship between the aggregated operational data and the quality data by machine learning for each of the classifications of the quality defects.

6. The quality defect diagnosis device according to claim 1, wherein the classifications of the quality defects are two or more of a leading section, a tail end section, a middle section, a widthwise edge section, a single defect, or clustered defects.

7. The quality defect diagnosis device according to claim 1, wherein the data aggregation unit aggregates the operational data by calculating any one or more of a mean value, a maximum value, a minimum value, a standard deviation, a variance, or a difference between maximum and minimum of the operational data for each block or each product.

8. The quality defect diagnosis device according to claim 3, wherein correlation is obtained between the quality data and a template generated in advance for each trend of quality defects, and the quality defects are classified on a basis of a magnitude of the correlation.

9. A quality defect diagnosis method for diagnosing a quality defect occurring in a product, the method comprising:
a data dividing step of two-dimensionally dividing product data as a diagnosis subject into predetermined blocks by a data dividing means comprised in a computer, the product data including operational data and quality data;
a data aggregation step of extracting the operational data for each of predetermined classifications of quality defects on a basis of a trend of quality defects in the divided blocks and aggregating the extracted operational data for each of the blocks and for each region including two or more of the blocks by a data aggregation means comprised in the computer;
a quality defect determination step of determining presence or absence of occurrence of a quality defect by using a plurality of prediction models which is generated for each of the classifications of quality defects and in which a relationship between the aggregated operational data and the quality data is learned by a quality defect quality defect determination means comprised in the computer; and
a factor estimation step of estimating a factor of the quality defect on a basis of a quality defect quality defect determination step result by a factor estimation means comprised in the computer.
